# EUROPÄISCHE PATENTSCHRIFT

(11) **EP 1 759 966 B1**
(45) Veröffentlichungstag und Bekanntmachung des Hinweises auf die Patenterteilung: **10.09.2008**
(21) Anmeldenummer: 05018927.3
(22) Anmeldetag: 31.08.2005
(51) Int. Cl.: B62J 1/08

(54) **Halterung für einen Fahrradsattel**
Fixture for bicycle saddle
Fixation d'une selle de bicyclette

(43) Veröffentlichungstag der Anmeldung: 07.03.2007
(73) Patentinhaber: BMC Trading AG, 2540 Grenchen (CH)
(72) Erfinder: Singenberger, Rolf, 1040 Echallens (CH); Wehrli, Marc, 4143 Dornach (CH); Gasser, Reto, 3323 Bäriswil (CH)
(74) Vertreter: Werner, André

(56) Entgegenhaltungen:
- WO-A-20/05009829
- GB-A- 487 135
- US-A- 5 695 241

## Beschreibung

Die vorliegende Erfindung betrifft eine Halterung für einen Fahrradsattel nach dem Oberbegriff von Anspruch 1. Eine Halterung mit den Merkmalen des Oberbegriffs des ersten Anspruchs ist bekannt aus WO 2005/009829. Je nach Art des Fahrrades sind verschiedene Sattelhalterungen bekannt, mit denen der Sattel mit dem Rahmen des Fahrrades verbunden ist. Häufig ist dabei die relative Position des Sattels in Bezug auf den Rahmen verstellbar ausgeführt. Damit kann der Sattel individuell unter Berücksichtigung der Körperabmessungen des jeweiligen Fahrers in Bezug auf seine Position resp. Abstand zur Pedale und zum Lenker eingestellt werden.

In einer einfachsten Ausführung ist der Sattel am Kopf einer im Rahmen des Fahrrades längsverschiebbar fixierbaren Sattelstange befestigt. Damit lässt sich die Höhe des Sattels entsprechend der Länge der Beine des Benutzers individuell einstellen, um einen optimalen Bewegungsablauf für das Treten zu ermöglichen. Die Fixierung erfolgt dabei beispielsweise durch Festklemmen der im Rahmen verschiebbar angeordneten Sattelstange mittels einer über eine Schraube zu betätigenden Klemmvorrichtung. So kann beispielsweise das Ende des Rahmenrohres, im welches die Sattelstange eingeschoben ist, mittels einer Schelle zusammengedrückt werden, um die Sattelstange in der gewünschten Position zu fixieren.

Um den Sitzkomfort zu erhöhen, lässt sich bei weiteren Ausführungen auch der Neigungswinkel des Sattels in Bezug auf die Sattelstange einstellen. Dabei ist der Sattel beispielsweise über einen mit einem Gewinde versehenen Bolzen drehbar mit der Sattelstange verbunden.

Diese bekannten Lösungen weisen in der Regel für jede Verstell- resp. Positioniermöglichkeit eine eigene, separate Befestigungs- resp. Arretiereinrichtung auf, die jeweils separat bedient werden muss.

Die Aufgabe der vorliegenden Erfindung bestand nun darin, eine Halterung für einen Fahrradsattel vorzuschlagen, die eine einfache Verstellbarkeit sowie eine zuverlässige Befestigung des Fahrradsattels erbringt und darüber hinaus ein sehr komfortables Handling und Benutzen ermöglicht und damit den Gebrauchswert erhöht.

Diese Aufgabe wird erfindungsgemäss durch die Merkmale des kennzeichnenden Teils von Anspruch 1 gelöst. Weitere Ausführungsformen der Erfindung sind in den weiteren Ansprüchen definiert.

Die Halterung für einen Fahrradsattel umfasst ein in einem Rahmenrohr eines Fahrrades höhenverstellbar einsetzbares Sattelrohr, an dessen oberes Ende der Fahrradsattel angeordnet ist und in dessen unteres Ende ein Spreizelement eingreift, das mittels eines Zugelementes betätigbar ist. Die Halterung umfasst ferner einen auf der oberen Stirnfläche des Sattelrohres aufliegenden, im wesentlichen auf letzterer längsverschiebbaren Sattelträger sowie eine zweiteilige Sattelklemme, welche mit dem Sattelträger gekoppelt ist und bezüglich letzterem in wählbaren Stellungen verschwenkbar ist. Weiterhin gehört zur Halterung ein durch eine Längsnut des Sattelträgers führender Niederhalter, welcher seinerseits mit der Sattelklemme gekoppelt ist. Ein Stellmechanismus dient dazu, das Zugelement und den Niederhalter relativ zueinander zu verstellen und dabei das Spreizelement gegenüber dem Sattelrohr zu verschieben und die Sattel klemme gegen den Sattelträger und letzteren gegen die Stirnfläche des Sattelrohres in der gewählten Stellung unverrückbar festzuklemmen.

Beim Lösen des Stellmechanismus wird damit vorteilhaft erreicht, dass sämtliche Bewegungsgrade des Sattels ausgenützt werden können, d.h. dass der Sattel in alle möglichen Richtungen bewegt resp. verschwenkt werden kann, um die optimale Position einzustellen. Danach kann durch Betätigen des Stellmechanismus diese Position fixiert werden. Damit können vorteilhaft mit einer einzigen Betätigung sämtliche Bewegungsmöglichkeiten des Sattels fixiert werden.

Beispielsweise weist der Sattelträger auf seiner Oberseite eine vorzugsweise kreisbogenförmige gekrümmte, nach innen gewölbte Gleitfläche auf, auf der die Sattelklemme verschiebbar gelagert ist. Dadurch wird in Folge des Gleitens der Sattelklemme auf der Gleitfläche die Sattelklemme in eine Schwenkbewegung versetzt. Somit kann die Neigung des mit der Sattelklemme verbundenen Sattels, d.h. die Längsachse des Sattels in Bezug auf den Sattelträger, eingestellt und in der gewünschten Position fixiert werden.

Beispielsweise sind der Niederhalter und die Sattelklemme durch einen Mitnehmer miteinander gekoppelt, welcher formschlüssig in den Niederhalter eingreift und in einer Führungsnut in der Sattelklemme geführt ist. Dieser Mitnehmer überträgt die Bewegung resp. Kraftfluss vom Niederhalter auf die Sattelklemme, wobei sich die Sattelklemme dennoch in einem gewissen Grad gegenüber dem Niederhalter verschwenken und lateral verschieben lässt.

Beispielsweise ist der Mitnehmer in der Länge einstellbar ausgeführt, vorzugsweise mittels eines Schraubgewindes. Damit kann beispielsweise die Sattelklemme vom Niederhalter gelöst werden und durch ein Ersatzteil ausgetauscht werden. Auch können damit die durch verschiedene Durchmesser der Haltebügel von unterschiedlichen Sattelformen bedingten Ausdehnungsunterschiede der Sattelklemme ausgeglichen werden, um eine zuverlässige gesamte Klemmwirkung der Halterung zu gewährleisten.

Beispielsweise umfasst der Stellmechanismus mindestens eine von Aussen zugängliche Stellschraube, durch die der Niederhalter mit einem Zwischenelement verbunden ist, das über das Zugelement mit dem Spreizelement verbunden ist. Dabei dient die eine Stellschraube dem Lösen resp. Arretieren der Halterung, indem der Niederhalter relativ zum Spreizelement resp- das Zwischenelement verschoben wird. Vorteilhaft kann damit durch eine einzige Stellschraube der Stellmechanismus betätigt werden. Vorteilhaft ist diese Schraube im Wesentlichen parallel zur Längsachse des Sattelrohres ausgerichtet, womit sie leicht in die Kontur des Sattelrohres integriert und ggf. verkleidet werden kann. Neben den aerodynamischen Vorteilen stehen damit auch keine scharfkantigen Teile vom Sattelrohr nach Aussen ab, wie dies bei herkömmlichen Sattelrohr-Verstelleinrichtungen der Fall ist, was gerade bei Rahmenrohren aus Kunststoff, beispielsweise faserverstärktem Kunststoff besonders vorteilhaft ist. Weiter greift die Stellschraube lediglich in die Teile der Verstelleinrichtung ein und stützt sich weder direkt auf das Sattelrohr noch auf das Rahmenrohr ab, was wiederum gerade bei aus Kunststoff bestehenden Rahmen von grossem Vorteil ist.

Eine zweite Schraube kann vorteilhaft der Montage und der Justierung des Niederhalters dienen. In der Regel braucht eine solche zweite Schraube lediglich beim Zusammenbau der Halterung bedient resp. eingestellt zu werden.

Beispielsweise besteht das Sattelrohr aus Kunststoff, vorzugsweise aus faserverstärktem Kunststoff. Damit kann auf einfache und kostengünstige Weise eine optimale Formgebung des Kopfbereiches des Sattelrohres erzielt werden, der neben den aerodynamischen Vorteilen auch ästhetisch vorteilhaft wirkt.

Ein Ausführungsbeispiel der vorliegenden Erfindung wird nachstehend anhand von Figuren noch näher erläutert. Es zeigen:
Fig. 1 einen hinteren Bereich eines Fahrradrahmens mit einem Rahmenrohr, darin eingesetztem Sattelrohr, und erfindungsgemässer Halterung, in seitlicher, teilweise transparenter Darstellung;
Fig. 2 einen oberen Bereich der Anordnung gemäss Fig. 1 mit teilweise aus dem Rahmenrohr 1 ausgeschobenem Sattelrohr 2, ohne Sattel;
Fig. 3 einen oberen Bereich der Anordnung gemäss Fig. 2, in gewechselter Perspektive;
Fig. 4 eine Sattelklemme in perspektivischer Darstellung;
Fig. 5 einen Sattelträger, in perspektivischer Darstellung;
Fig. 6 ein durch ein Zugelement mit einem Zwischenelement verbundenes Spreizelement, in perspektivischer Darstellung;
Fig. 7 das Sattelrohr in perspektivischer Darstellung;
Fig. 8 das Sattelrohr mit Sattel in einer hinteren Position und nach unten geneigter Sattelspitze; und
Fig. 9 die Anordnung gemäss Fig. 8 mit Sattel in einer vorderen Position und nach oben gerichteter Sattelspitze.

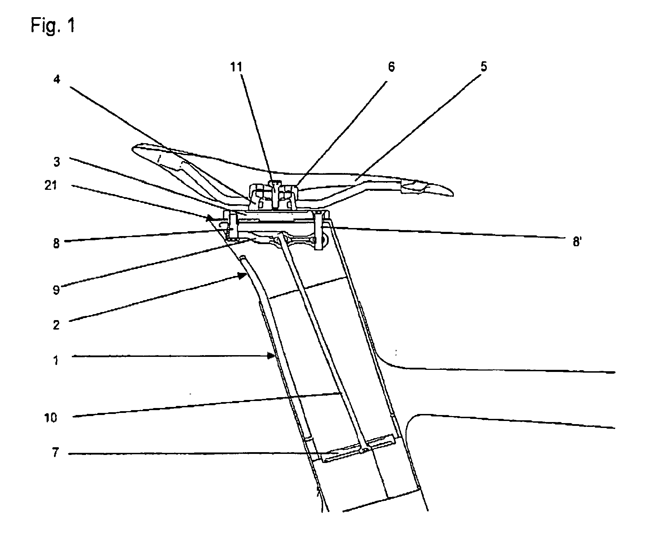

Fig. 1 zeigt in teilweise transparenter Darstellung einen hinteren Bereich eines Fahrradrahmens, der ein Rahmenrohr 1 umfasst, in dem ein Sattelrohr 2 in axialer Richtung verschiebbar geführt ist, wobei in Fig. 1 das Sattelrohr 2 in vollständig in das Rahmenrohr 1 eingeschobenen Zustand gezeigt ist. Beim dargetstellten Ausführungsbeispiel besteht das Rahmenrohr 1 aus Kunststoff und weist einen elliptischen resp. tropfenförmigen Querschnitt auf.

Ein mit dem Sattel 5 verbundener und auf einem schienenartigen Niederhalter 3 verschiebbar geführter Sattelträger 4 liegt auf einer Auflagefläche 21 am oberen Ende des Sattelrohres 2 auf. An dem Niederhalter 3 ist eine Mitnahmeschraube 11 befestigt, die ihrerseits mit einer auf ein einem Sattelträger 4 aufliegenden Sattelklemme 6 verbunden ist.

In das untere Ende des Sattelrohres 2 greift ein Spreizelement 7 ein, welches über ein stangenförmiges Zugelement 10 mit dem Zwischenelement 9 verbunden ist.

Zwei Stellschrauben 8, 8', die jeweils mit einem Aussengewinde in ein Innengewinde des Niederhalters 3 eingreifen, verbinden das Zwischenelement 9 mit dem Niederhalter 3.

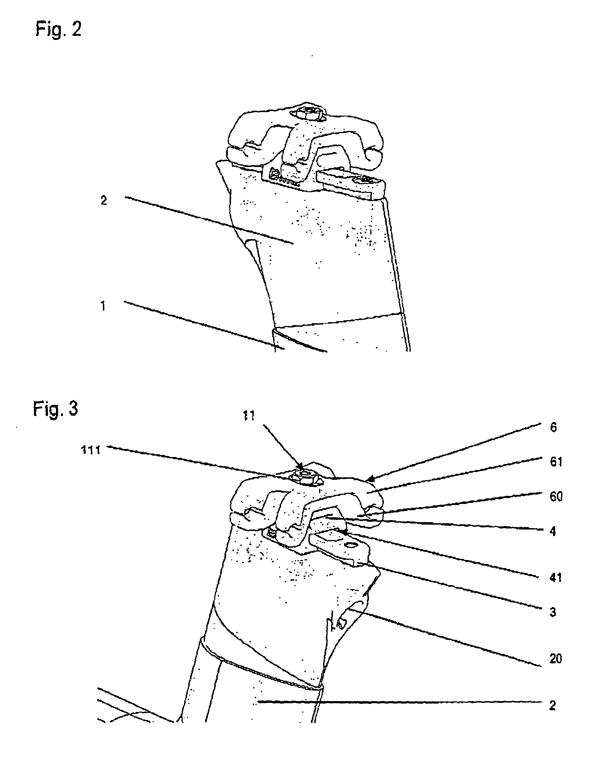

Fig. 2 zeigt in seitlicher Ansicht einen oberen Bereich des Rahmenrohrs 1 mit teilweise aus dem Rahmenrohr 1 ausgeschobenem, transparent dargestelltem Sattelrohr 2 und erfindungsgemässer Halterung ohne Sattel.

Fig. 3 zeigt einen oberen Bereich der Anordnung gemäss Fig. 2 von hinten gesehen. Der Niederhalter 3 durchgreift eine Längsnut 41 im Sattelträger 4. Die auf dem Sattelträger 4 aufliegende Unterseite 60 der Sattelklemme 6 besitzt eine zur Aussenkontur des Sattelträgers 4 komplementäre Form. Die Stellschrauben 8, 8' (in Fig. 3 nicht ersichtlich), welche den Niederhalter 3 mit dem Zwischenelement 9 verbinden, durchragen jeweils einen nach Aussen geöffneten Führungsdurchgang 20 im Sattelrohr 2. Die Mitnahmeschraube 11 durchragt je eine langlochförmige Führungsnut im Oberteil 61 und im Unterteil 60 der Sattelklemme 6 sowie eine kreisförmige Durchtrittsöffnung im Sattelträger 4 und greift, mit einem Aussengewinde versehen, in ein Innengewinde in dem Niederhalter 3 ein. Der Kopf 111 der Klemmschraube 11 stützt sich an der Oberseite des Oberteils 61 ab.

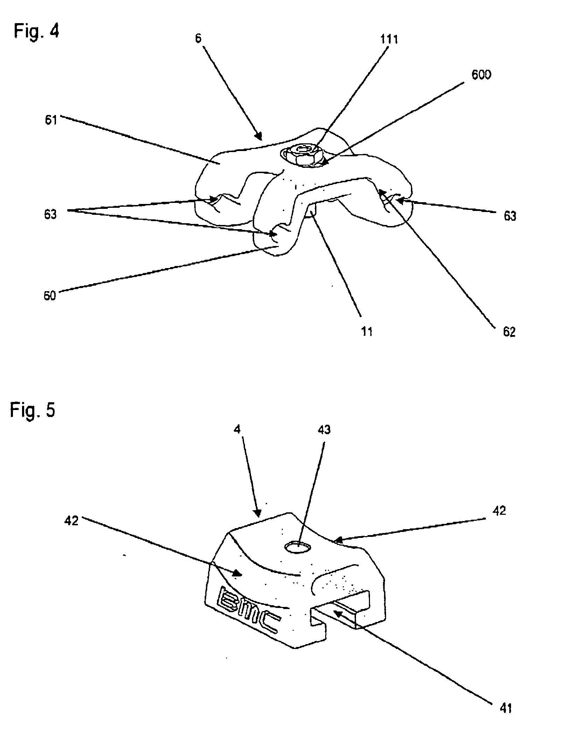

Fig. 4 zeigt die zweiteilige Sattelklemme 6 in perspektivischer Darstellung. Das Unterteil 60 und das separate Oberteil 61 der Sattelklemme 6 bilden zwischen sich zwei seitlich verlaufende längliche Spalte 62, an deren beiden Enden jeweils eine runde Aufnahmeöffnung 63 ausgebildet ist, die paarweise zueinander fluchtend angeordnet sind. Jedes Paar der zu einander fluchtender Aufnahmeöffnungen 63 wird im Zustand des montierten Sattels 5 von je einem von zwei sich unterhalb des Sattels erstreckenden und mit der Unterseite des Sattels fest verbundenen Haltebügel 50 durchragt. Die Mitnahmeschraube 11 ist in Führungsnuten 600 von Unterteil 60 und Oberteil 61 längsverschiebbar geführt.

Fig. 5 zeigt in perspektivischer Ansicht den Sattelträger 4 in welchem eine nach unten geöffnete Führungsnut 41 verläuft, die der Aufnahme des Niederhalters 3 dient. Die Oberseite des Sattelträgers 4 zeigt eine nach innen gewölbte Kontur in Form einer kreisbogenförmigen gekrümmten Gleitfläche 42, auf der das Unterteil 60 der Sattelklemme 6 aufliegt und darauf gleiten kann. Die Durchtrittsöffnung 43 befindet sich in einem mittleren Bereich der Gleitfläche 42.

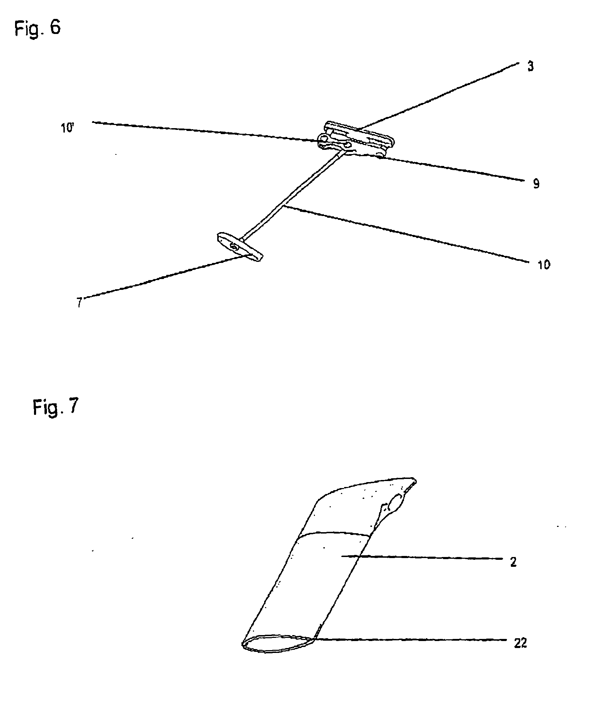

Fig. 6 zeigt die Anordnung bestehend aus dem Spreizelement 7, dem Zugelement 10 und dem Zwischenelement 9 zur Fixierung des Sattelrohres 2 im Rahmenrohr 1. Das Spreizelement 7 weist einen zum Innenquerschnitt des Sattelrohres 2 resp. des Rahmenrohres 1 äquivalenten, konischen nach oben verjüngenden Querschnitt auf. Das Zugelement 10 ist mit seinem oberen Ende am Zwischenelement 9 und mit seinem unteren Ende am Spreizelement 7 befestigt. Vorteilhaft erfolgt dies über einen drehbar im Zwischenelement 9 gelagerten Zapfen 10'. Durch die sich nach oben verjüngende Form des Spreizelements 7 ergibt sich als Umfangsfläche des Spreizelements 7 eine konische Fläche resp. Keilfläche.

Fig. 7 zeigt das Sattelrohr 2 in perspektivischer Darstellung, welches einen ovalen resp. tropfenförmigen, dem Querschnitt des Rahmenrohres 1 entsprechenden Querschnitt besitzt. Seitlich am Sattelrohr 2 erstreckt sich in dessen Längsrichtung ein Spreizspalt 22, der der leichteren (weiter unten beschriebenen) Aufspreizung des Sattelrohres 2 mittels des Spreizelements 7 dient.

Im Folgenden wird unter Bezugnahme auf die vorstehend beschriebenen Figuren die Funktionsweise der erfindungsgemässen Halterung erläutert.

Bei gelöster Halterung ist das Sattelrohr 2 im Rahmenrohr 1 frei verschiebbar. Der Niederhalter 3 und der mit diesem verbundene Kopf 111 der Mitnahmeschraube 11 befinden sich in einer oberen Position, in welcher der Kopf 111 vom Oberteil 61 entfernt resp. gelöst ist oder zumindest keinen nennenswerten Druck auf die Sattelklemme 6 und damit auf den Sattelträger 4 ausübt. Der Sattelträger 4 ist entlang der Längsachse des Niederhalters 3 gegenüber der Stirnfläche 21 des Sattelrohres 2 frei verschiebbar und die Haltebügel 50 des Sattels 5 sind in den Aufnahmeöffnungen 63 der Sattelklemme 6 frei verschiebbar.

Die Sattelklemme 6 kann auf der kreisbogenförmig gekrümmten Gleitfläche 42 gleiten, wodurch der mit der Sattelklemme 6 verbundene Sattel 5 eine Neigebewegung um seine Querachse vollzieht.

Zur Überführung der Halterung vom gelösten in den gespannten Zustand bewegt man durch Betätigen der hinteren Stellschraube 8 das Zwischenelement 9 und den Niederhalter 3 aufeinander zu. Dabei wird die Bewegung des Zwischenelementes 9 über das Zugelement 10 auf das Spreizelement 7 übertragen. Die konische Keilfläche 70 des Spreizelementes 7 beginnt an der Innenseite des Sattelrohrs 2 entlang hochzufahren, wobei das Sattelrohr 2 nach aussen gespreizt und gegen die Innenseite des Rahmenrohrs 1 gepresst wird. In der Folge entsteht zwischen Sattelrohr 2 und Rahmenrohr 1 eine Klemmverbindung, welche das Spreizelement 7 in dieser Position blockiert.

Gleichzeitig wird beim Betätigen der Stellschraube 8 der Niederhalter 3 gegenüber dem Sattelträger 4 nach unten bewegt, bis der Kopf der mit dem Niederhalter 3 verbundenen Mitnahmeschraube 11 den Sattelträger 4 über die Sattelklemme 6 gegen die Stirnfläche 21 des Sattelrohres presst, wodurch der Sattelträger 4 klemmend in Bezug auf das Sattelrohr 2 fixiert wird.

Durch den Druck, den die Mitnahmeschraube 11 auf das Sattelklemmenoberteil 61 ausübt, werden die Haltebügel 50 des Sattels 5 in den Aufnahmeöffnungen 63 ebenfalls festgeklemmt und gleichzeitig das Sattelklemmenunterteil 60 gegen die Gleitfläche 42 auf der Oberseite des Sattelträgers 4 gepresst. Durch den Druck mit dem das Unterteil 60 der Sattelklemme 6 gegen die Gleitfläche 42 drückt, wird die Sattelklemme 6 in Bezug auf den Sattelträger 4 fixiert und damit der eingestellt Neigewinkel des Sattels 5 gesichert.

Es versteht sich von selbst, dass der Übergang von der gespannten zur gelösten Halterung erfolgt, in dem der Niederhalter 3 und das Spreizelement 7 resp. das Zwischenelement 9 durch Betätigen der hinteren Stellschrauben 8 voneinander entfernt werden.

Die vordere Stellschraube 8' dient lediglich dem Zusammenbau der Halterung und dem Einstellen des für das Spannen resp. Lösen der Halterung idealen Abstandes zwischen dem Niederhalter 3 und dem Spreizelement 7 resp. dem Zwischenelement 9. Anstelle dieser Stellschraube 8' könnte auch ein in der Länge festes Verbindungselement eingesetzt werden, beispielsweise in Form eines den Niederhalter 3 mit dem Zwischenelement 9 verbindenden Bügels. Ein solcher Bügel könnte beispielsweise direkt am Niederhalter 3 ausgebildet sein, und in eine Halteöffnung des Zwischenelementes 9 eingreifen.

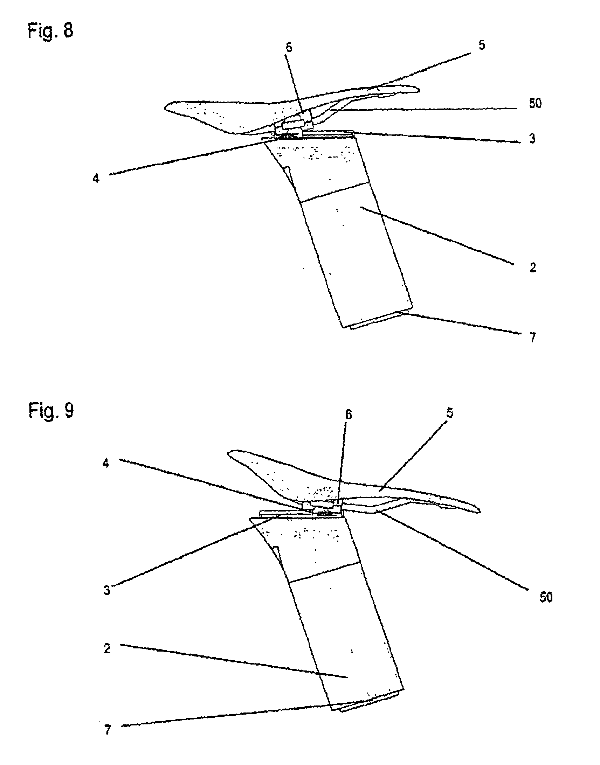

In Fig. 8 ist der Sattel 5 in seiner hintersten Position, d.h. am weitesten vom Lenkerbereich des Rahmens entfernt, dargestellt. Dabei ist der Sattelträger 4 im Bereich des hinteren Randes des Niederhalters 3 angeordnet. Die Neigung des Sattels 5 ist hier nahezu waagrecht eingestellt.

In Fig. 9 ist der Sattel 5 in seiner vordersten, d.h. dem Lenkerbereich des Rahmens nächsten Position dargestellt. Dabei ist der Sattelträger 4 gegenüber Fig. 8 nach vorne, an den vorderen Rand des Niederhalters 3 verschoben angeordnet. Der Sattel 5 ist gleichzeitig nach vorne geneigt verschwenkt und die Haltebügel 50 sind im Vergleich zu Fig. 8 in Bezug auf die Sattelklemme 6 nach vorne verschoben worden.

Die erfindungsgemässe Halterung eignet sich, wie im Ausführungsbeispiel dargestellt, besonders gut für den Einsatz in Rahmenrohren aus Kunststoff. Dabei ist auch das Sattelrohr aus Kunststoff gefertigt, was insgesamt eine sehr leichte, stabile und aerodynamisch sehr günstige Befestigung für den Sattel darstellt. Dabei lässt sich der Sattel einfach in praktisch allen Richtungen und Neigungswinkeln verstellen und auch zuverlässig fixieren, wobei die Fixierung über ein einziges Betätigungsorgan erfolgen kann.

Selbstverständlich kann die erfindungsgemässe Halterung aber auch in Rahmenrohren aus Metall eingesetzt werden. Ebenfalls eignet sich die erfindungsgemässe Halterung ebenfalls für die Nachrüstung von bestehenden Fahrrädern.

## Patentansprüche

1. Halterung für einen Fahrradsattel (5) mit einem in einem Rahmenrohr (1) eines Fahrrades höhenverstellbar einsetzbaren Sattelrohr (2), an dessen oberen Ende der Fahrradsattel (5) angeordnet werden kann, **dadurch gekennzeichnet, dass** in das untere Ende des Sattelrohres (2) ein Spreizelement (7) eingreift, welches mittels eines Zugelementes (10) betätigbar ist, sowie mit einem auf die obere Stirnfläche (21) des Sattelrohres (2) aufliegenden im wesentlichen auf letzterer längsverschiebbaren Sattelträger (4), einer zweiteiligen Sattelklemme (6), welche mit dem Sattelträger (4) gekoppelt ist und bezüglich letzterem in wählbaren Stellungen verschwenkbar ist, ferner mit einem durch eine Längsnut (41) des Sattelträgers (4) führenden Niederhalter (3), welcher seinerseits mit der Sattelklemme (6) gekoppelt ist und einem Stellmechanismus (8, 8'), um das Zugelement (10) und den Niederhalter (3) miteinander zu verbinden und relativ zueinander zu verstellen und dabei das Spreizelement (7) gegenüber dem Sattelrohr (2) zu verschieben und die Sattelklemme (6) gegen den Sattelträger (4) und letzteren gegen die Stirnfläche (21) des Sattelrohres (2) in der gewählten Stellung unverrückbar festzuklemmen.

2. Halterung nach Anspruch 1, **dadurch gekennzeichnet, dass** der Sattelträger (4) auf seiner Oberseite eine vorzugsweise kreisbogenförmig gekrümmte, nach innen gewölbte Gleitfläche (42) aufweist, auf der die Sattelklemme (6) verschiebbar gelagert ist.

3. Halterung nach Anspruch 1 oder 2, **dadurch gekennzeichnet, dass** der Niederhalter (3) und die Sattelklemme (6) über einen Mitnehmer (11) miteinander gekoppelt sind, welcher formschlüssig in den Niederhalter (3) eingreift und in einer Führungsnut (600, 610) in der Sattelklemme geführt ist.

4. Halterung nach Anspruch 3, **dadurch gekennzeichnet, dass** der Mitnehmer (11) in der Länge verstellbar ist, vorzugsweise mittels eines Gewindes.

5. Halterung nach einem der Ansprüche 1 bis 4, **dadurch gekennzeichnet, dass** der Stellmechanismus mindestens eine von Aussen zugängliche Stellschraube (8, 8') umfasst, durch die der Niederhalter (3) mit einem Zwischenelement(9) in Verbindung steht, das über das Zugelement (10) mit dem Spreizelement (7) verbunden ist.

6. Halterung nach einem der Ansprüche 1 bis 5, **dadurch gekennzeichnet, dass** das Sattelrohr (2) aus Kunststoff, vorzugsweise aus faserverstärktem Kunststoff, besteht.

## Claims

1. Fixture for a bicycle saddle (5), with a saddle tube (2) which can be inserted in a height-adjustable manner in a frame tube (1) of a bicycle and at the upper end of which the bicycle saddle (5) can be arranged, **characterized in that** an expanding element (7) which can be actuated by means of a tension element (10) engages in the lower end of the saddle tube (2), and with a saddle support (4) which rests on the upper end surface (21) of the saddle tube (2) and can be displaced longitudinally essentially on said end surface, a two-part saddle clamp (6) which is coupled to the saddle support (4) and is pivotable in selectable positions with respect thereto, furthermore with a holding-down means (3) which leads through a longitudinal groove (41) of the saddle support (4) and, for its part, is coupled to the saddle clamp (6), and with an adjusting mechanism (8, 8') in order to connect the tension element (10) and the holding-down means (3) to each other and to adjust them relative to each other and, in the process, to displace the expanding element (7) in relation to the saddle tube (2) and to firmly clamp the saddle clamp (6) against the saddle support (4) and the latter against the end surface (21) of the saddle tube (2) immovably in the selected position.

2. Fixture according to Claim 1, **characterized in that** the saddle support (4) has, on its upper side, an inwardly curved sliding surface (42) which is preferably curved in the shape of an arc of a circle and on which the saddle clamp (6) is mounted displaceably.

3. Fixture according to Claim 1 or 2, **characterized in that** the holding-down means (3) and the saddle clamp (6) are coupled to each other via a driver (11) which engages in a form-fitting manner in the holding-down means (3) and is guided in a guide groove (600, 610) in the saddle clamp.

4. Fixture according to Claim 3, **characterized in that** the driver (11) can be adjusted in length, preferably by means of a thread.

5. Fixture according to one of Claims 1 to 4, **characterized in that** the adjusting mechanism comprises at least one adjusting screw (8, 8') which is accessible from the outside and by means of which the holding-down means (3) is connected to an intermediate element (9) which is connected to the expanding element (7) via the tension element (10).

6. Fixture according to one of Claims 1 to 5,
**characterized in that** the saddle tube (2) is composed of plastic, preferably of fibre-reinforced plastic.

## Revendications

1. Fixation pour une selle de bicyclette (5) comportant un tube de selle (2) qui est apte à être introduit, réglable en hauteur, dans un tube de cadre (1) d'une bicyclette et à l'extrémité supérieure duquel on peut disposer la selle (5), **caractérisée en ce qu'**il est prévu dans l'extrémité inférieure du tube de selle (2) un élément d'écartement (7) qui est apte à être actionné à l'aide d'un élément de traction (10) ; et avec un support de selle (4) qui est posé sur la surface frontale supérieure (21) du tube de selle (2) et qui est globalement mobile longitudinalement dans celui-ci ; une attache de selle en deux parties (6) qui est reliée au support de selle (4) et qui est apte à pivoter par rapport à celui-ci jusqu'à des positions aptes à être choisies ; et également un élément de serrage (3) qui traverse une rainure longitudinale (41) du support de selle (4) et qui est lui-même relié à l'attache de selle (6) ; et un mécanisme de réglage (8, 8') pour relier entre eux l'élément de traction (10) et l'élément de serrage (3) et pour les régler l'un par rapport à l'autre, et pour déplacer l'élément d'écartement (7) par rapport au tube de selle (2) et bloquer par serrage l'attache (6) contre le support (4) et celui-ci contre la surface frontale (21) du tube (2) dans la position choisie.

2. Fixation selon la revendication 1, **caractérisée en ce que** le support de selle (4) présente sur son côté supérieur une surface de glissement (42) bombée vers l'intérieur, de préférence en arc de cercle, sur laquelle l'attache de selle (6) est montée mobile.

3. Fixation selon la revendication 1 ou 2, **caractérisée en ce que** l'élément de serrage (3) et l'attache de selle (6) sont reliés entre eux par un organe d'entraînement (11) qui entre dans l'élément (3) par complémentarité de forme et qui est guidé dans une rainure de guidage (600, 610) de l'attache de selle.

4. Fixation selon la revendication 3, **caractérisée en ce que** l'organe d'entraînement (11) est réglable en longueur, de préférence grâce à un filetage.

5. Fixation selon l'une des revendications 1 à 4, **caractérisée en ce que** le mécanisme de réglage comprend au moins une vis de réglage (8, 8') qui est accessible de l'extérieur et grâce à laquelle l'élément de serrage (3) est relié à un élément intermédiaire (9) qui est lui-même relié par l'intermédiaire de l'élément de traction (10) à l'élément d'écartement (7).

6. Fixation selon l'une des revendications 1 à 5, **caractérisée en ce que** le tube de selle (2) est en matière plastique, de préférence en matière plastique renforcée par des fibres.
